# EUROPÄISCHE PATENTSCHRIFT

(11) **EP 1 431 077 B1**
(45) Veröffentlichungstag und Bekanntmachung des Hinweises auf die Patenterteilung: **18.02.2009**
(21) Anmeldenummer: 03025545.9
(22) Anmeldetag: 08.11.2003
(51) Int. Cl.: B60C 11/00

(54) **Fahrzeugluftreifen**
Pneumatic vehicle tyre
Pneumatique pour véhicules

(30) Priorität: 20.12.2002 DE 10259907
(43) Veröffentlichungstag der Anmeldung: 23.06.2004
(73) Patentinhaber: Continental Aktiengesellschaft, 30165 Hannover (DE)
(72) Erfinder: Liederer, Werner, Dr., 30419 Hannover (DE)

(56) Entgegenhaltungen:
- EP-A- 0 475 929
- EP-A- 0 627 332
- EP-A- 0 970 822
- GB-A- 2 313 814

## Beschreibung

Die Erfindung betrifft einen Fahrzeugluftreifen, insbesondere Radialreifen, mit einem Laufstreifen, welcher sich aus Profilpositiven zusammensetzt, die durch im bzw. über den Zentralbereich diagonal verlaufende Rillen sowie durch Querrillen strukturiert sind, wobei die diagonal verlaufende Rillen gemeinsam mit den Profilpositiven Basispitches mit mindestens zwei verschiedenen Umfangslängen bilden, die über den Reifenumfang gemäß einer Pitchfolge geräuschoptimiert angeordnet sind, wobei die Basispitches zumindest in einem in Umfangsrichtung verlaufenden Laufstreifenbereich durch die Querrillen zumindest in zwei unterschiedliche Profilpositivgruppen gegliedert sind, die in weitere Pitches geteilt sind.

Ein derartiger Laufstreifen eines Fahrzeugluftreifen ist auf der EP-A-0 627 332 bekannt. Der Basispitch ist im Außenbereich des Laufstreifens aus durch Querrillen untergliederte weitere Pitches gebildet, wobei die weiteren Pitches des Basispitches gleiche Längen aufweisen.

Bei der Gestaltung von Laufstreifen ist es üblich, zur Verminderung des Reifen/Fahrbahngeräusches den über den Reifenumfang aufeinander folgenden gleichartigen Profilabschnitten, den Pitches, unterschiedliche Umfangslängen zuzuordnen. Dabei werden Laufstreifen üblicherweise mit Pitches mit zwei bis fünf unterschiedlichen Umfangslängen ausgeführt, deren Längenverhältnis zueinander vorab festgelegt und deren günstigste Aufeinanderfolge, die Pitchfolge, mittels geeigneter Rechenprogramme ermittelt wird.

Zum Thema Pitches und Pitchfolgen von Laufstreifen findet sich in der Patentliteratur eine Vielzahl von weiteren Lösungsvorschlägen. So ist beispielsweise aus der EP-A-0 970 822 ein Fahrzeugluftreifen der eingangs genannten Art bekannt. Hier wird ausgehend von der Schulterblockreihe die Pitchfolge derart abgestimmt, dass an keiner Stelle mehr als zwei Pitches übereinstimmender Länge unmittelbar aufeinander folgen. Die Anzahl der Blöcke in den Schulterblockreihen soll dabei das Zwei- oder Dreifache der Anzahl der Blöcke in den den Schulterblockreihen benachbarten mittleren Blockreihen betragen. Damit sollen ein gleichmäßigeres Abriebsbild und gleichzeitig ein günstiger Einfluss auf das Reifen/Fahrbahngeräusch erzielt werden.

Aus der EP-B-0 114 594 ist es bekannt, unterschiedliche Pitchanzahlen in den beiden Laufstreifenhälften vorzusehen, um das Reifen/Fahrbahngeräusch günstig zu beeinflussen.

In der Praxis hat sich nun herausgestellt, dass die bekannten Gliederungen der Struktur eines Laufstreifens in Pitches und die zugehörigen Pitchfolgen nach wie vor verbesserungswürdig sind, insbesondere im Hinblick auf das Erzielen eines möglichst gleichmäßigen Abriebes und einer weiteren Optimierung des Reifen/Fahrbahngeräusches.

Der Erfindung liegt daher die Aufgabe zu Grunde, einen Fahrzeugluftreifen bzw. dessen Laufstreifen diesbezüglich zu verbessern.

Gelöst wird die gestellte Aufgabe erfindungsgemäß dadurch, dass zumindest ein Typ von Profilpositivgruppen zumindest ein Pitch mehr aufweist als der oder ein anderer Typ von Profilpositivgruppen und dass die weiteren Pitches innerhalb eines Basispitches unterschiedliche Längen aufweisen, derart, dass das Verhältnis der Länge des kürzesten weiteren Pitch zur Länge des längsten weiteren Pitch 1 : 1,2 bis 1 : 1,6 beträgt.

Somit erfolgt bei einem erfindungsgemäß ausgeführten Laufstreifen in einem Umfangsbereich eine weitere Unterteilung in Pitches. Die Basispitches werden möglichst optimal über den Reifenumfang angeordnet, die weiteren Pitches können anschließend "dazu" optimiert werden, wobei diesbezüglich eine Vielzahl von Möglichkeiten zur Verfügung steht. Die Erfindung gestattet es daher, einen Laufstreifen geräuschmäßig sehr gut zu optimieren und gleichzeitig auch andere Reifeneigenschaften, beispielsweise gleichmäßigen Abrieb, zu berücksichtigen.

Bei einer bevorzugten Ausführungsform der Erfindung sind die weiteren Pitches innerhalb ihrer Profilpositivgruppe gemäß einer bestimmten Abfolge angeordnet. Dies ist eine weitere Maßnahme zur Optimierung der Anordnung der Pitches, um das Reifen/Fahrbahngeräusch zu reduzieren.

In diesem Zusammenhang ist es ferner von Vorteil, wenn die Abfolge der weiteren Pitches innerhalb eines Typs einer Profilpositivgruppe auf die Abfolge der weiteren Pitches innerhalb des gleichen und / oder eines weiteren Typs einer Profilpositivgruppe angepasst ist.

Zusätzlich oder alternativ kann die Pitchanorndung dadurch optimiert werden, dass die Abfolge der weiteren Pitches an die Abfolge der Basispitches angepasst wird.

Eine Anpassung an andere erwünschte Reifeneigenschaften, wie beispielsweise gleichmäßigen Abrieb, lässt sich dadurch erleichtern, dass die Anzahl der weiteren Pitches in den verschiedenen Typen von Profilpositivgruppen zwischen 2 und 5 beträgt.

Dabei kann sich der die Profilpositivgruppen aufweisende Umfangsbereich des Laufstreifens ausschließlich aus Gruppen mit mindestens zwei Pitches zusammensetzen. Je nach Profilausführung kann es ferner von Vorteil sein, wenn der in Profilpositivgruppen gegliederte Umfangsbereich des Laufstreifens auch einzelne Basispitches aufweist, die lediglich aus einem einzigen Pitch bestehen.

Das Reifen/Fahrbahngeräusch lässt sich auch dadurch günstig beeinflussen, dass das Verhältnis der Länge des kürzesten Basispitch zur Länge des längsten Basispitch größer gewählt wird, als das diesbezügliche Verhältnis innerhalb der weiteren Pitches. Dabei hat sich ein Längenverhältnis - Verhältnis der Länge des kürzesten Basispitch zur Länge des längsten Basispitch - von 1 : 1,6 bis 1 : 2 als besonders vorteilhaft herausgestellt.

Eine Optimierung auf weiterer Reifeneigenschaften, wie beispielsweise Aquaplaningverhalten oder gleichmäßiger Abrieb wird durch die Maßnahme, die Querrillen in den Profilpositivgruppen schmäler auszuführen als die diagonal verlaufenden Rillen, begünstigt.

Für eine Minimierung des Reifen/Fahrbahngeräusches kann es ferner von Vorteil sein, die Breite der Querrillen in den Profilpositivgruppen mit der Länge der Pitches in diesen Gruppen mit zu variieren.

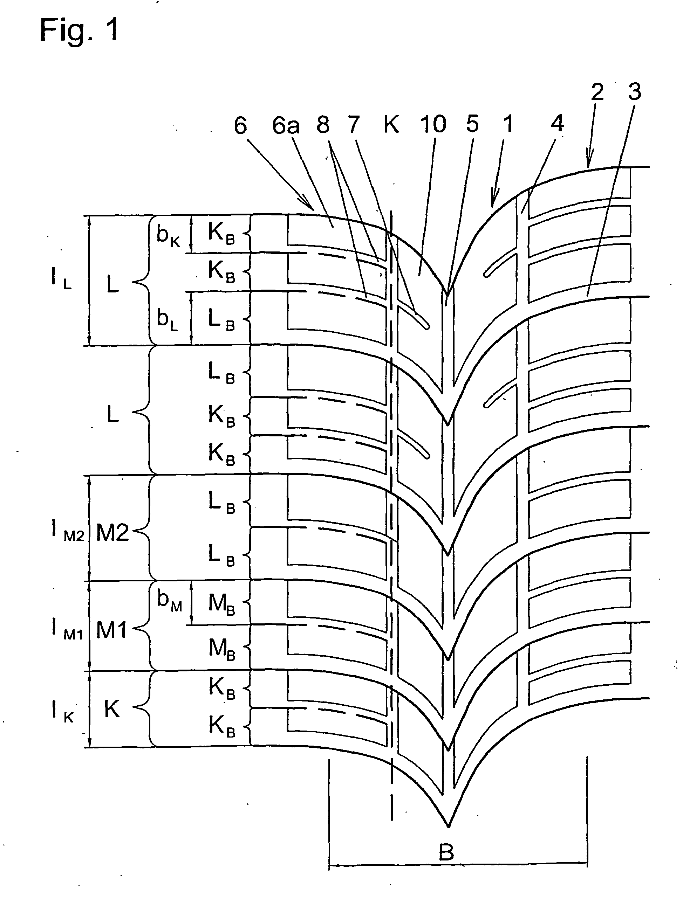

Weitere Merkmale, Vorteile und Einzelheiten der Erfindung werden nun anhand der Zeichnung, die ein Ausführungsbeispiel darstellt, näher beschrieben. Die einzige Zeichnungsfigur (Fig. 1) ist eine schematische Darstellung einer Teilabwicklung eines Laufstreifens eines Fahrzeugluftreifens

In Fig. 1 ist beispielhaft eine Ausführungsform eines Laufstreifens für einen PKW - Reifen, insbesondere einen Radialreifen, dargestellt. Der Laufstreifen weist beidseitig einer zentralen, in Umfangsrichtung umlaufenden Umfangsnut 5 je eine zentrale Blockreihe 1 auf, die jeweils durch breite, ebenfalls in Umfangsrichtung verlaufende Umfangsnuten 4 von Schulterblockreihen 2 getrennt sind. Charakteristisch für den Laufstreifen und seine Gliederung in einzelne Blöcke in den Blockreihen 1, 2 sind Rillen 3, die in jeder Laufstreifenhälfte bei der zentralen Umfangsnut 5 beginnend bis in die Laufstreifenrandbereiche verlaufen und außerhalb der Laufstreifenbreite B, die der Latschbreite des Reifens entspricht, enden. Die somit von der Laufstreifenmitte bis zu den Laufstreifenrändern durchgehenden Rillen 3 sind in jenem Bereich, in welchem sie die Blöcke 10 der zentralen Blockreihen 1 voneinander trennen, zumindest über einen Großteil ihrer Erstreckung mehr zur Umfangsrichtung orientiert als zur Querrichtung, sodass der Winkel, den sie mit Umfangsrichtung einschließen, höchstens 45° beträgt. Die in den Schulterblockreihen 2 verlaufenden Abschnitte der Rillen 3 sind mehr in Querrichtung des Laufstreifens orientiert als zur Umfangsrichtung, sodass der Winkel, den die Rillen 3 hier mit der Umfangsrichtung einschließen, ≥ 45° ist, insbesondere deutlich mehr als 45° ist. In den Schulterblockreihen 2 teilen die Rillen 3 die Blockreihen 2 in Blockgruppen 6 mit Einzelblöcken 6a, auf die später noch näher eingegangen wird.

Durch den zu den Laufstreifenrändern immer flacher werdenden Verlauf der Rillen 3 ist der kürzeste gegenseitige Abstand von in Umfangsrichtung benachbarten Rillen 3 in der Laufstreifenmitte wesentlich geringer als an den Laufstreifenrändern.

Der dargestellte Laufstreifen setzt sich, wie es bei Laufstreifen üblich ist, aus in Umfangsrichtung aneinander gereihten bzw. aufeinander folgenden Profilschritten, die üblicherweise Pitches genannt werden, zusammen. Das Aufteilen von Laufstreifen in Pitches, die unterschiedliche Umfangslängen aufweisen, dient bekannter Weise dem Zweck, das Reifen/Fahrbahngeräusch zu minimieren bzw. zu optimieren, um die beim Abrollen des Reifens entstehende hörbaren Frequenzen derart zu verteilen bzw. entstehen zu lassen, dass sie für das menschliche Gehör möglichst wenig störend wirken.

Bei der in Fig. 1 dargestellten Ausführung setzt sich der Laufstreifen aus Basispitches L, M1, M2, K mit vier unterschiedlichen Längen I_{L}, I_{M1}, I_{M2}, I_{K} zusammen, wobei I_{L} > I_{M1} >I_{M2} > I_{K} ist. Jedes Pitch L, M1, M2, K umfasst eine der Rillen 3 und die bis zur nächsten Rille 3 verlaufenden bzw. vorgesehenen Profilstrukturen. Diese sind bei der dargestellten Ausführungsform pro Laufstreifenfläche ein Block 10 aus einer der zentralen Blockreihen 1 und eine Blockgruppe 6 aus der Schulterblockreihe 2.

Das Verhältnis der Umfangslängen I_{L}, I_{M1}, I_{M2}, I_{K} der Basispitches ist bei der in Fig. 1 gezeigten Ausführung derart, dass I_{K} : I_{M2} : I_{M1} : I_{L} = 1 : 1,18 : 1,38 : 1,69 beträgt. In einem Pitch K der Länge I_{K}, welches das Pitch mit der kleinsten vorgesehenen Umfangslänge ist, ist bei der in Fig. 1 gezeigten Ausführungsform der zugehörige Block 10 in der zentralen Blockreihe 1 nicht weiter strukturiert, wobei der besseren Übersicht halber jegliche schmalen Einschnitte und dergleichen in den Profilstrukturen überhaupt nicht dargestellt sind. Hingegen ist in einem Block 10 der zentralen Blockreihe 1, die einem Pitch der Länge I_{L} angehört, von der Umfangsnut 4 ausgehend eine bis etwa mittig in den betreffenden Block 10 hineinreichende Sacknut 7 vorgesehen, die diesen Block 10 etwas unterteilt und zumindest im Wesentlichen die Orientierung der Rillen 3 aufweist. Damit wird in jenen Blöcken 10 der zentralen Blockreihen, die eine große Umfangserstreckung aufweisen, eine Gliederung durchgeführt, durch die sowohl das Reifen/Fahrbahngeräusch als auch der Abrieb des Laufstreifens begünstig wird.

Eine ähnliche Gliederung bzw. Unterteilung ist auch in den Schulterblockreihen 2 vorhanden, indem dort die bereits erwähnten Blockgruppen 6 vorgesehen sind, die bei der dargestellten Ausführungsform entweder aus zwei oder aus drei Blöcken 6a bestehen. Es sind auch Ausführungen möglich, bei welchen bis zu fünf Blöcke in einer Blockgruppe vorhanden sind. Gemäß der Erfindung sind nun die Blöcke 6a Bestandteile weiterer Pitches L_{B}, M_{B}, K_{B} unterschiedlichen Umfangslängen b_{L}, b_{M} und b_{K} , wobei b_{L} > b_{M} > b_{K}. Innerhalb einer Blockgruppe 6 sind die Blöcke 6a durch Querrillen 8 voneinander getrennt, die schmäler sind, insbesondere wesentlich schmäler sind, als die Rillen 3. Die Orientierung und der Verlauf der Querrillen 8 entspricht jener der Rillen 3. Bei anderen Ausführungen von Laufstreifen können die zu einer Blockgruppe behörenden Querrillen auch die Breite der zwischen den Blockgruppen verlaufenden Rillen 3 aufweisen oder sogar etwas breiter sein. Dargestellt ist eine Variante mit übereinstimmend breiten Querrillen 8. Es kann aber auch vorgesehen werden, die Breite der Querrillen 8 mit der Umfangserstreckung der Blöcke 6a zu variieren, insbesondere Blöcken 6a mit größerer Umfangslänge breitere Querrillen 8 zuzuordnen. Die Querrillen 8 sind in jedem Fall breiter als sogenannte Einschnitte und weisen eine Mindestbreite von 1,5 mm auf.

Die Pitches L_{B}, M_{B} und K_{B} setzen sich jeweils aus einem Block 6a und einer diesem benachtbarten Nut 8 oder 3 zusammen. Gehört etwa zu einem Pitch K_{B} eine Nut 3, so ist auf Grund der größeren Breite der Nut 3 die Umfangslänge des Blocks 6a etwas geringer.

In einem Basispitch L mit der größten Umfangslänge I_{L} besteht bei der dargestellten Ausführungsform eine Blockgruppe 6 aus drei Blöcken 6a, in allen anderen Basispitches M1, M2, K besteht jeweils eine Blockgruppe 6 aus zwei Blöcken 6a. Dabei kann die Ausführung auch derart getroffen werden, dass in einem Basispitch K mit der kleinsten Umfangslänge I_{K} nur ein einzelner Block 6a vorgesehen ist und /oder in einem Basispitch M1, M2 mittlerer Länge I_{M1}, I_{M2} die Anzahl der Blöcke 6a in der Blockgruppe 6 auch drei beträgt. Wie die Anordnung erfolgt und wie günstig sie ist hängt unter anderem auch davon ab, wie das Längenverhältnis der Basispitches L, M1, M2 und K zueinander gewählt wird.

Die Pitchlängen b_{L}, b_{M}, b_{K} der Pitches L_{B}, M_{B}, K_{B} der Blockgruppen 6 sind entsprechend auf die Längen der Basispitches L, M1, M2, K abgestimmt, um in den Schulterblockreihen 2 sämtliche Basispitches L, M1, M2, K aus den drei weiteren Pitches L_{B}, M_{B}, K_{B} zusammensetzen zu können. Bei der dargestellten Ausführung weist das kürzeste Pitch K_{B} die Relativlänge 0,5, das mittlere Pitch M_{B} die Relativlänge 0,59 und das längste Pitch L_{B} die Relativlänge 0,69 auf. Demnach kann ein Basispitch K der Länge I_{K} aus zwei weiteren Pitches K_{B} der Länge b_{K} zusammengesetzt werden, ein Basispitch M1 der Länge I_{M1} setzt sich aus zwei Pitches M_{B} der Länge b_{M} zusammen, ein mittleres Basispitch M2 der Länge I_{M2} besteht aus zwei Pitches L_{B} der Länge b_{L}. Das Basispitch L mit der größten Länge L_{L} kann beispielsweise aus zwei Pitches K_{B} der Länge b_{K} und einem Pitch L_{B} der Länge b_{L} zusammengesetzt werden.

Weitere Ausführungsbeispiele sind in der nachstehenden Tabelle zusammengefasst, wobei in der linken Spalte die Basispitches und in der rechten Spalte die weiteren Pitches angegeben sind. Die Zahlen in den Klammern geben jeweils die Relativlängen an. In der dritten Spalte ist das Längenverhältnis der weiteren Pitches enthalten.

| **Basispitches** | **Weitere Pitches** | **Längenverhältnisse der weiteren Pitches** |
|---|---|---|
| K ( 1 ) | K_{B} K_{B} (.5 .5) | 1 : 1,2 : 1.4 |
| M (1.4) | L_{B} L_{B} (.7 .7) | |
| L (1.8) | M_{B} M_{B} M_{B} (.6 .6 .6) oder | |
| | K_{B} M_{B} L_{B} (.5 .6 .7) und andere Reihenfolgen | |
| K(1) | K K (.5 .5) | |
| M1 (1.2) | M M (.6 .6) oder L M | |
| M2 (1.4) | L L (.7.7) | 1 : 1.2 : 1.4 |
| L (1.6) | K K M (.5 .5 .6) und andere Reihenfolgen | |
| K (1) | K_{B} K_{B} (.5 .5) | 1 : 1.2 : 1.4 |
| M1 (1.3) | M_{B} L_{B} (.6 .7) oder L M | |
| M2 (1.6) | K_{B} K_{B} M_{B} (.5 .5 .6) und andere Reihenfolgen | |
| L (2) | M_{B} L_{B} L_{B} (.6 .7 .7) und andere Reihenfolgen | |
| | oder K_{B} K_{B} K_{B} K_{B} (.5 .5 .5 .5) | |
| K (1) | L_{B} (1) | 1 : 1.21 : 1. 43 |
| L (1.55) | M_{B} K_{B} (.85 .7) und andere Reihenfolgen | |
| K (1) | L_{B} (1) | 1 : 1, 43 1 : 1.21 : 1. 43 |
| M (1.4) | K_{B} K_{B} (.7 .7) | |
| L (1.7) | K_{B} L_{B} (.7 1) und andere Reihenfolgen | |
| | oder M_{B} M_{B} (.85 .85) | |
| K (1 ) | K_{B} K_{B} (.5 .5) | 1 : 1.354 |
| M (1.354) | L_{B} L_{B} (.677 .677) | |
| L (1.677) | K_{B} K_{B} L_{B} (.5 .5 .677) und andere | |
| | Reihenfolgen | |

Gemäß der Erfindung werden daher in den Schulterblockreihen 2 die Pitches L_{B}, M_{B}, K_{B} unterschiedlicher Umfangslängen b_{L}, b_{M}, b_{K} innerhalb der Basispitches L, M1, M2, K möglichst günstig verteilt bzw. angeordnet.

In einem erfindungsgemäß ausgeführten Laufstreifen sind somit die Profilstrukturen in den Schulterblockreihen optisch und geometrisch aneinander angepasst und gekoppelt. Die erfindungsgemäße Teilung der Blockgruppen in Pitches erlaubt weitere Varianten der Wahl von Pitchfolgen und Pitchlängen, sodass sich das Reifen/Fahrbahngeräusch besser optimieren lässt und gleichzeitig auch auf andere Reifeneigenschaften, beispielsweise gleichförmigen Abrieb etc., wesentlich leichter Rücksicht genommen werden kann, als es bei den bislang bekannten herkömmlichen Optimierungen mittels Pitchgeometrien möglich war.

Die Gliederung von Laufstreifen in Basispitches und weitere Pitches kann auch ohne das Vorhandensein von Umfangsnuten in den Laufstreifenseitenbereichen erfolgen, wobei auch keine Umfangsnut imzentralen Bereich angeordnet sein muss. Die betreffende Gliederung kann nur durch diagonal verlaufende Rillen in Verbindung mit weiteren Querrillen, die sacknutartig enden, erfolgen. Ein derart ausgeführter Laufstreifen hat somit keine "echte" Blockstruktur mehr sondern eine durch quer und / oder diagonal verlaufende Rillen geprägte Profilpositivstruktur. Je nach der getroffenen Gliederung und dem gewählten Verlauf der diagonal verlaufenden Rillen kann der bzw. ein Laufstreifenbereich, der in weitere Pitches gegliedert ist, auch im mittleren Bereich des Laufstreifens vorgesehen sein. Auch die Pitchgrenzen müssen nicht in der dargestellten Art verlaufen, diese können auch Profilpositive bzw. Blöcke durchqueren.

Die Anzahl der Basispitches unterschiedlicher Umfangslängen beträgt mindestens zwei und insbesondere bis zu fünf, kann jedoch auch größer sein. Die Anzahl unterschiedlich langer weiterer Pitches wird je nach Anzahl der Basispitches und der sonstigen Profilgestaltung zwischen zwei und fünf betragen.

Bevorzugt beträgt das Verhältnis der Längen des kürzesten Basispitches zur Länge des längsten Basispitches von 1 : 1,6 bis 1 : 2. Für die weiteren Pitches wird dieses Verhältnis von 1 : 1,2 bis 1 : 1,6 gewählt. Insbesondere ist in einem bestimmten Laufstreifen das Verhältnis der Längen kürzestes Pitch zu längstem Pitch für die Basispitches größer als für die weiteren Pitches.

Erfindungsgemäß ausgeführte Reifen können ferner sowohl PKW als auch LKW und sonstige Fahrzeuglaufstreifen sein.

## Patentansprüche

1. Fahrzeugluftreifen, insbesondere Radialreifen, mit einem Laufstreifen, welcher sich aus Profilpositiven zusammensetzt, die durch im oder über den Zentralbereich diagonal verlaufende Rillen sowie durch Querrillen strukturiert sind, wobei die diagonal verlaufende Rillen gemeinsam mit den Profilpositiven Basispitches mit mindestens zwei verschiedenen Umfangslängen bilden, die über den Reifenumfang gemäß einer Pitchfolge geräuschoptimiert angeordnet sind, wobei die Basispitches (L, M1, M2, K) zumindest in einem in Umfangsrichtung verlaufenden Laufstreifenbereich durch die Querrillen (8) zumindest in zwei unterschiedliche Profilpositivgruppen (6) gegliedert sind, die in weitere Pitches (L_{B}, M_{B}, K_{B}) geteilt sind
**dadurch gekennzeichnet,**
**dass** zumindest ein Typ von Profilpositivgruppen (6) zumindest ein Pitch mehr aufweist als der oder ein anderer Typ von Profilpositivgruppen (6) und dass die weiteren Pitches innerhalb eines Basispitches unterschiedliche Längen aufweisen, derart, dass das Verhältnis der Länge des kürzesten weiteren Pitches (K_{B}) zur Länge des längsten weiteren Pitches (L_{B}) 1 : 1,2 bis 1 : 1,6 beträgt.

2. Fahrzeugluftreifen nach Anspruch 1, **dadurch gekennzeichnet, dass** die weiteren Pitches (L_{B}, M_{B}, K_{B}) innerhalb ihrer Profilpositivgruppe (6) gemäß einer bestimmten Abfolge angeordnet sind.

3. Fahrzeugluftreifen nach Anspruch 1 oder 2, **dadurch gekennzeichnet, dass** die Abfolge der weiteren Pitches (L_{B}, M_{B}, K_{B}) innerhalb eines Typs einer Profilpositivgruppe (6) auf die Abfolge der weiteren Pitches (L_{B}, M_{B}, K_{B}) innerhalb des gleichen und / oder eines weiteren Typs einer Profilpositivgruppe (6) angepasst ist.

4. Fahrzeugluftreifen nach einem der Ansprüche 1 bis 3, **dadurch gekennzeichnet, dass** die Abfolge der weiteren Pitches (L_{B}, M_{B}, K_{B}) an die Abfolge der Basispitches (L, M1, M2, K) angepasst ist.

5. Fahrzeugluftreifen nach einem der Ansprüche 1 bis 4, **dadurch gekennzeichnet, dass** die Anzahl weiterer Pitches (L_{B}, M_{B}, K_{B}) in den verschiedenen Typen von Profilpositivgruppen (6) zwischen zwei und fünf beträgt.

6. Fahrzeugluftreifen nach einem der Ansprüche 1 bis 5, **dadurch gekennzeichnet, dass** sich der Profilpositivgruppen (6) aufweisende Umfangsbereich des Laufstreifens ausschließlich aus Gruppen mit mindestens zwei Pitches zusammensetzt.

7. Fahrzeugluftreifen nach einem der Ansprüche 1 bis 6, **dadurch gekennzeichnet, dass** der in Profilpositivgruppen (6) gegliederte Umfangsbereich des Laufstreifens mit Basispitches (L, M1, M2, K), die aus nur einem Pitch bestehen, versehen ist.

8. Fahrzeugluftreifen nach einem der Ansprüche 1 bis 7, **dadurch gekennzeichnet, dass** das Verhältnis der Länge des kürzesten Basispitches (K) zur Länge des längsten Basispitches (L) größer ist als das diesbezügliche Verhältnis der weiteren Pitches (K_{B}, L_{B}).

9. Fahrzeugluftreifen nach einem der Ansprüche 1 bis 8, **dadurch gekennzeichnet, dass** das Verhältnis der Länge des kürzesten Basispitches (K) zur Länge des längsten Basispitches von 1: 1,6 bis 1: 2 beträgt.

10. Fahrzeugluftreifen nach einem der Ansprüche 1 bis 9, **dadurch gekennzeichnet, dass** die Querrillen (8) in den Profilpositivgruppen (6) schmäler sind als die diagonal verlaufenden Rillen (4).

11. Fahrzeugluftreifen nach einem der Ansprüche 1 bis 10, **dadurch gekennzeichnet, dass** die Breite der Querrillen (8) in den Profilpositivgruppen (6) mit der Länge der Pitches (L_{B}, M_{B}, K_{B}) in diesen Gruppen (6) mitvariiert wird.

12. Fahrzeugluftreifen nach einem der Ansprüche 1 bis 11, **dadurch gekennzeichnet, dass** die Profilpositivgruppen Blockgruppen (6) in einer Schulterblockreihe (2) sind.

13. Fahrzeugluftreifen nach einem der Ansprüche 1 bis 5, **dadurch gekennzeichnet, dass** die diagonal verlaufenden Rillen (4) am Laufstreifenrand mit der Umfangsrichtung des Reifens einen wesentlich größeren Winkel einschließen als im Bereich der Laufstreifenmitte.

## Claims

1. Pneumatic vehicle tyre, in particular a radial tyre, having a tread which is composed of positive profiles which are patterned by grooves which run diagonally in or over the central region and by transverse grooves, wherein the grooves which run diagonally form, together with the positive profiles, basic pitches having at least two different circumferential lengths which are optimized in terms of noise over the circumference of the tyre in accordance with a pitch sequence, wherein the basic pitches (L, M1, M2, K) are divided into at least two different groups (6) of positive profiles by the transverse grooves (8) at least in a tread region which extends in the circumferential direction, said groups (6) of positive profiles being divided into further pitches (L_{B}, M_{B}, K_{B}),
**characterized**
**in that** at least one type of group (6) of positive profiles has at least one pitch more than the other type or another type of group (6) of positive profiles, and in that the further pitches within a basic pitch have different lengths such that the ratio of the length of the shortest further pitch (K_{B}) to the length of the longest further pitch (L_{B}) is from 1:1.2 to 1:1.6.

2. Pneumatic vehicle tyre according to Claim 1, **characterized in that** the further pitches (L_{B}, M_{B}, K_{B}) are arranged in a specific sequence within their group (6) of positive profiles.

3. Pneumatic vehicle tyre according to Claim 1 or 2, **characterized in that** the sequence of the further pitches (L_{B}, M_{B}, K_{B}) within one type of a group (6) of positive profiles is matched to the sequence of the further pitches (L_{B}, M_{B}, K_{B}) within the same type and/or within a further type of a group (6) of positive profiles.

4. Pneumatic vehicle tyre according to one of Claims 1 to 3, **characterized in that** the sequence of the further pitches (L_{B}, M_{B}, K_{B}) is matched to the sequence of the basic pitches (L, M1, M2, K).

5. Pneumatic vehicle tyre according to one of Claims 1 to 4, **characterized in that** the number of further pitches (L_{B}, M_{B}, K_{B}) in the various types of groups (6) of positive profiles is between two and five.

6. Pneumatic vehicle tyre according to one of Claims 1 to 5, **characterized in that** the circumferential region of the tread which has groups (6) of positive profiles is composed exclusively of groups with at least two pitches.

7. Pneumatic vehicle tyre according to one of Claims 1 to 6, **characterized in that** the circumferential region of the tread which is divided into groups (6) of positive profiles is provided with basic pitches (L, M1, M2, K) which are composed of just one pitch.

8. Pneumatic vehicle tyre according to one of Claims 1 to 7, **characterized in that** the ratio of the length of the shortest basic pitch (K) to the length of the longest basic pitch (L) is greater than the relevant ratio of the further pitches (K_{B}, L_{B}).

9. Pneumatic vehicle tyre according to one of Claims 1 to 8, **characterized in that** the ratio of the length of the shortest basic pitch (K) to the length of the longest basic pitch is from 1:1.6 to 1:2.

10. Pneumatic vehicle tyre according to one of Claims 1 to 9, **characterized in that** the transverse grooves (8) in the groups (6) of positive profiles are narrower than the grooves (4) which run diagonally.

11. Pneumatic vehicle tyre according to one of Claims 1 to 10, **characterized in that** the width of the transverse grooves (8) in the groups (6) of positive profiles co-varies with the length of the pitches (L_{B}, M_{B}, K_{B}) in these groups (6).

12. Pneumatic vehicle tyre according to one of Claims 1 to 11, **characterized in that** the groups of positive profiles are groups (6) of blocks in a row (2) of shoulder blocks.

13. Pneumatic vehicle tyre according to one of Claims 1 to 5, **characterized in that** the grooves (4) which run diagonally enclose a substantially larger angle with the circumferential direction of the tyre at the edge of the tread than in the region of the centre of the tread.

## Revendications

1. Bandage pneumatique pour roue de véhicule, en particulier bandage radial, qui présente une bande de roulement constituée de profilés positifs structurés par des rainures qui s'étendent en diagonale dans ou à travers la partie centrale ainsi que par des rainures transversales, les rainures qui s'étendent en diagonale formant avec les profilés positifs des pas de base qui présentent au moins deux longueurs périphériques différentes qui sont disposées à la périphérie du bandage suivant une succession de pas optimisée en termes de bruit, tandis qu'au moins dans une partie de la bande de roulement qui s'étend dans la direction périphérique, les pas de base (L, M1, M2, K) sont divisés par les rainures transversales (8) en au moins deux groupes différents (6) de profilés positifs qui sont divisés en d'autres pas (L_{B}, M_{B}, K_{B}),
**caractérisé en ce que**
au moins un type de groupes (6) de profilés positifs présente au moins un pas de plus que l'autre type ou qu'un autre type de groupes (6) de profilés positifs et
**en ce que** les autres pas présentent différentes longueurs à l'intérieur d'un pas de base, le rapport entre la longueur du plus court autre pas (K_{B}) et la longueur du plus long autre pas (L_{B}) étant compris entre 1 : 1,2 et 1 : 1,6.

2. Bandage pneumatique pour roue de véhicule selon la revendication 1, **caractérisé en ce que** les autres pas (L_{B}, M_{B}, K_{B}) sont disposés suivant une succession définie à l'intérieur de leur groupe (6) de profilés positifs.

3. Bandage pneumatique pour roue de véhicule selon les revendications 1 ou 2, **caractérisé en ce que** la succession des autres pas (L_{B}, M_{B}, K_{B}) à l'intérieur d'un type de groupes (6) de profilés positifs est adaptée à la succession des autres pas (L_{B}, M_{B}, K_{B}) à l'intérieur du même type et/ou d'un autre type de groupes (6) de profilés positifs.

4. Bandage pneumatique pour roue de véhicule selon l'une des revendications 1 à 3, **caractérisé en ce que** la succession des autres pas (L_{B}, M_{B}, K_{B}) est adaptée à la succession des pas de base (L, M1, M2, K).

5. Bandage pneumatique pour roue de véhicule selon l'une des revendications 1 à 4, **caractérisé en ce que** le nombre des autres pas (L_{B}, M_{B}, K_{B}) dans les différents types de groupes (6) de profilés positifs est compris entre deux et cinq.

6. Bandage pneumatique pour roue de véhicule selon l'une des revendications 1 à 5, **caractérisé en ce que** la partie périphérique de la bande de roulement qui présente les groupes (6) de profilés positifs est exclusivement constituée de groupes qui présentent au moins deux pas.

7. Bandage pneumatique pour roue de véhicule selon l'une des revendications 1 à 6, **caractérisé en ce que** la partie périphérique de la bande de roulement divisée en groupes (6) de profilés positifs est dotée de pas de base (L, M1, M2, K) qui ne sont constitués que d'un seul pas.

8. Bandage pneumatique pour roue de véhicule selon l'une des revendications 1 à 7, **caractérisé en ce que** le rapport entre la longueur du plus court pas de base (K) et la longueur du plus long pas de base (L) est supérieur au même rapport pour les autres pas (K_{B}, L_{B}).

9. Bandage pneumatique pour roue de véhicule selon l'une des revendications 1 à 8, **caractérisé en ce que** le rapport entre la longueur du plus court pas de base (K) et la longueur du plus long pas de base est compris entre 1 : 1,6 et 1 : 2.

10. Bandage pneumatique pour roue de véhicule selon l'une des revendications 1 à 9, **caractérisé en ce que** dans les groupes (6) de profilés positifs, les rainures transversales (8) sont plus étroites que les rainures (4) qui s'étendent en diagonale.

11. Bandage pneumatique pour roue de véhicule selon l'une des revendications 1 à 10, **caractérisé en ce que** dans les groupes (6) de profilés positifs, la largeur des rainures transversales (8) varie en même temps que la longueur des pas (L_{B}, M_{B}, K_{B}) dans ces groupes (6).

12. Bandage pneumatique pour roue de véhicule selon l'une des revendications 1 à 11, **caractérisé en ce que** les groupes de profilés positifs sont des groupes (6) de blocs d'une rangée (2) de blocs d'épaulement.

13. Bandage pneumatique pour roue de véhicule selon l'une des revendications 1 à 5, **caractérisé en ce que** sur le bord de la bande de roulement, les rainures (4) qui s'étendent en diagonale forment avec la direction périphérique du bandage un angle beaucoup plus grand que dans la partie centrale de la bande de roulement.
